# EUROPEAN PATENT SPECIFICATION

(11) **EP 2 090 770 B1**
(45) Date of publication and mention of the grant of the patent: **21.08.2013**
(21) Application number: 08425096.8
(22) Date of filing: 15.02.2008
(51) Int. Cl.: F02M 35/10

(54) **Engine with exhaust gas recirculation, method for recirculating and vehicle provided with such engine**
Motor mit Abgasrückführung, Rückführungsverfahren und mit einem derartigen Motor ausgerüstetes Fahrzeug
Moteur à recirculation de gaz d'échappement, procédé pour la recirculation et véhicule doté d'un tel moteur

(43) Date of publication of application: 19.08.2009
(73) Proprietor: FPT Industrial S.p.A., 10156 Torino (IT)
(72) Inventor: Brandizzi, Junio, 10036 Settimo Torinese (IT)
(74) Representative: Borsano, Corrado

(56) References cited:
- WO-A-2005/057002
- DE-A1- 2 225 852
- DE-A1- 4 320 045
- JP-A- 2002 349 355
- US-A- 4 811 697
- US-A1- 2007 017 490

## Description

### FIELD OF THE INVENTION

The present invention relates to an engine provided with exhaust gas recirculation, in particular a vehicle engine, more in particular a diesel engine for industrial vehicles. According to another embodiment, the invention relates to a turbocharged engine with exhaust gas recirculation on the high pressure side.

### DESCRIPTION OF THE PRIOR ART

Exhaust gas recirculation (or EGR) is a common practice in the field of internal combustion engines. According to this system a portion of the exhaust gases from the engine are recirculated upstream of the engine and then reintroduced into the combustion chambers with the intake air. This permits to lower the combustion flame temperature and leads to a reduced formation of nitrogen oxides, one of the main pollutants in internal combustion engine emissions.

The recirculation may be carried out by means of a provided recirculation line which takes the exhaust gases downstream of the engine, for example from the exhaust gas manifold, and reintroduces them into the intake manifold. In case the engine is turbocharged, the recirculation may take place between a point upstream of the turbine on the exhaust line and a point downstream of the compressor on the intake line. In this case the recirculation is on the high pressure side.

The recirculation line may be provided with different devices, for example a circulation compressor, if it is necessary to overcome a difference in pressure between the intake and the exhaust, a control valve, and a cooler in order to reduce the temperature of the recirculated gases.

The direct introduction into the intake manifold is not satisfactory enough, because it does not guarantee a good mixing of the exhaust gases with the intake air. Consequently, the percentage of recirculated gas into the gas mixture going into the cylinders is not the same. This reduces the efficiency of the recirculation in terms of the abatement of the pollutants, worsens the combustion conditions and the engine performance, and makes the thrust of the cylinders unequal, causing different wear and corrosion conditions in the cylinders, due to the different quantity of corrosive components, usually present in the exhaust gases, which arrive to the cylinders. Various introduction system at the input of the intake line of the manifold have been proposed. For example EP1580421 describes a module for the introduction of the recirculated gases through openings suitable to introduce the gas in a transverse direction with respect to the flow. The module is designed for being mounted at the input of the intake manifold and is able to considerably improve the mixing. However, the results are not yet satisfactory in terms of homogeneity of the distribution of the recirculated gases among the cylinders, and, in many applications, it has not always been possible to respect the targets in terms of pollutant emissions, given the stricter and stricter limits imposed by the law. It should be noted that the quantity of recirculated gases, according to these limits, has been growing more and more and the recirculated gases may represent considerable portions of the overall exhaust gases, often exceeding 30% and sometimes reaching 50%.

Therefore, it would be worthwhile to guarantee a higher uniformity of the distribution of the recirculated gases among the cylinders.

DE 4320045 discloses an example of exhaust gas recirculation arrangement, whom features are in the preamble of claim 1.

### SUMMARY OF THE INVENTION

The problems described above have been solved according to this invention by an internal-combustion engine, in particular a vehicle engine, equipped with a plurality of combustion chambers, an air intake line, an intake manifold suitable to distribute the air coming from said line to said combustion chambers, an exhaust line of the burnt gases, a recirculation line suitable to transfer a portion of the burnt gases from said exhaust line to said intake line, characterized in that said intake line has, between the introduction point of said burnt gases and the intake manifold, a segment of pipe long from 5 to 10 times the internal diameter of its cross section. Preferably, this segment of pipe has a substantially constant section, more preferably a circular section. In case of non circular sections, the term "diameter" refers to the equivalent diameter.

The invention relates also to a method for recirculating the burnt gases in an internal-combustion engine comprising the introduction of a portion of burnt gases into an intake line, the passage of a mixture of burnt gases and air in a segment of pipe long from 5 to 10 times the internal diameter of its cross section being part of said intake line, and the subsequent introduction of said mixture in an intake manifold of said engine.

The invention relates also to a vehicle, in particular an industrial vehicle, provided with the engine mentioned above.

This invention refers in particular to what mentioned in the claims attached hereto.

### LIST OF THE FIGURES

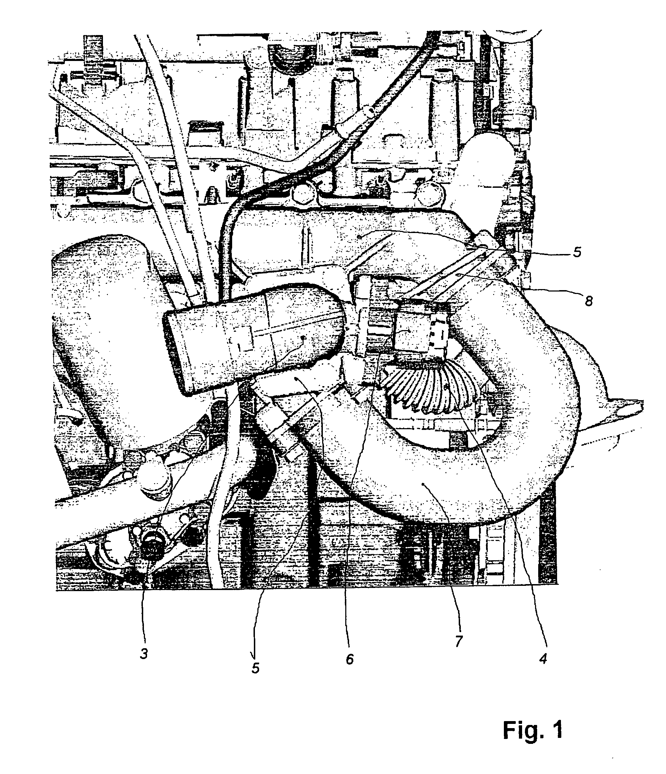

This invention will be now illustrated through a detailed description of preferred but non exclusive embodiments, furnished merely by way of example, with the aid of figure 1 attached hereto which shows a detail of an engine, partly disassembled, for industrial vehicle according to the present invention.

### DETAILED DESCRIPTION OF AN EMBODIMENT OF THE INVENTION

Figure 1 shows a detail of a diesel engine for industrial vehicle according to the present invention, which is a preferred embodiment of the present invention. The engine 1 is provided with an intake manifold 2, suitable to distribute the intake air to the combustion chambers, in the way known in the art. An intake line 3 brings the air sucked from the outside to the manifold. An exhaust gas recirculation line 4 brings a portion of the burnt gas withdrawn form the exhaust line to the intake line. An introduction module 5 of the type known, which may also function as mixer, may be included. For example it is possible to include a distribution chamber around the intake line, said chamber being connected to the recirculation line and to the intake line by means of adequately distributed holes. If the engine is turbocharged, the introduction point is downstream of the turbine on the intake line. In this case, the recirculation preferably takes place on the high pressure side, as defined above.

Devices of the type known may also be used in order to allow the recirculation; for example it is possible to include a valve, for example a throttle valve placed upstream of the introduction point, as to induce a depression in correspondence of the introduction point of the recirculated gases. Reference 6 shows the control mechanism of such valve. Otherwise pumps of various type may be used on the recirculation line, or throttling valves may be used on the exhaust line downstream of the withdrawal point of the gases to be recirculated, either before or after the turbine if the engine is turbocharged. A mobile diffuser of a variable geometry turbine may also be used in order to facilitate the recirculation.

It is also possible to include a cooler, in order to lower the temperature of the recirculated gases. These techniques are all known in the art, and do no need any further description.

It has been found that, in order to obtain an optimal mixing, which guarantees a uniform distribution of the recirculated gases among the various combustion chambers, it is necessary that the intake line has a segment of pipe 7 placed between the introduction point of the recirculated gases and the intake manifold, preferably having a constant diameter and being long from 5 to 10 times the internal diameter of its cross section. According to an embodiment of the invention this section may be equal to that of the intake line upstream of the introduction point of the recirculated gases, or it may be duly enlarged. According to an embodiment of the invention, the passage section of the mixture of air and burnt gases has an enlargement 8 in correspondence of the input of the manifold 2, as known in the prior art.

The segment 7 is preferably long from 7 and 8 times the internal diameter. .

Preferably, the gas flow undergoes a change of direction in the segment, which has at least a bend, such that the curvature radius, in the section where it is minimum, preferably does not exceed 2 times the internal diameter of the section, more preferably it is between 0,5 and 2 times. According to a possible embodiment of the invention, the flow undergoes a change of direction between 90° and 270°, for example at about 180° as in the case shown. There may be a further change of direction in correspondence of the input of the manifold. According to a preferred embodiment, this input is at a longitudinal extremity of the intake manifold, as in certain engines known in the art, in order to distribute the gas flow among the cylinders.

According to a particular embodiment of the invention, a cooler may be present on the intake line, in particular downstream of the compressor in a turbocharged engine (generally known as "aftercooler"). In this case, the introduction point of the recirculated gases may be downstream of this cooler. The invention is particularly suitable, also in case the cooler is not present.

Figure 1 shows an embodiment of the invention, which is particularly advantageous also in terms of the reduced dimensions of the structure. According to this embodiment, in the segment of pipe mentioned above the axis of symmetry of the transversal section are tangent to a substantially flat curve, which defines the direction of the flow. Other alternative embodiments are possible according to the experience and the needs of the person skilled in the art.

In comparison with solutions known in the art, even if they included a mixing module with the introduction of the recirculated gases close to or in correspondence the input of the intake manifold, it has been found that the present invention allows a better uniformity of the concentration of the recirculated gases in the various combustion chambers, with a variation lower than 1,5%, even in presence of a recirculation flow rate of 30% or more, a limit that is hardly reached by the engines of the type known. The possible improvement in terms of pollutant abatement in the burnt gases is considerable.

## Claims

1. Internal-combustion engine, in particular a vehicle engine, equipped with a plurality of combustion chambers, an air intake line (3), an intake manifold (2) suitable to distribute the air coming from said line to said combustion chambers, an exhaust line for the burnt gases, a recirculation line (4) suitable to transfer a portion of the burnt gases from said exhaust line to said intake line, **characterized in that** a segment pipe (7) of said intake line, between the introduction point of said burnt gases and the intake manifold, is long from 5 to 10 times the internal diameter of its cross section.

2. Engine according to claim 1, **characterized in that** said segment of pipe is long from 7 to 8 times its internal diameter.

3. Engine according to any of the previous claims, **characterized in that** said segment of pipe has at least a bend whose minimum curvature radius does not exceed 2 times the internal diameter of the section.

4. Engine according to claim 3, **characterized in that** said segment of pipe induces a change of direction of between 90 and 270°.

5. Turbocharged engine according to any of the previous claims, wherein the recirculation takes place on the high pressure side.

6. Diesel engine according to any of the previous claims.

7. Engine according to any of the previous claims, wherein no cooler is present on the intake line.

8. Engine according to claim 5 wherein a cooler is present downstream of the turbocharged compressor and the introduction point of the recirculated gases is downstream of said cooler.

9. Method for recirculating the burnt gases in an internal-combustion engine comprising the introduction of a portion of burnt gases in an intake line, the passage of a mixture of burnt gases and air in a segment of pipe (7), between the introduction point of said burnt gases and the intake manifold, long from 5 to 10 times the internal diameter of its cross section being part of said intake line, and the subsequent introduction of said mixture in an intake manifold of said engine.

10. Method according to claim 9, **characterized in that** said segment of pipe is long from 7 to 8 times its internal diameter.

11. Method according to any claim from 9 to 10, **characterized in that** said segment of pipe presents at least a bend whose minimum curvature radius does not exceed 2 times the internal diameter of the section.

12. Method according to any claim from 9 to 11, **characterized in that** the gases, between the introduction point of the recirculated gases and the input of the intake manifold, are forced to a change of direction between 90 and 270°,

13. Method according to any claim from 9 to 12, **characterized in that** the recirculated gases are introduced in the intake line downstream of a turbocharged compressor and of a possible cooler placed downstream of said compressor.

14. Vehicle, in particular industrial vehicle provided with an engine according to any claim from 1 to 8.

## Patentansprüche

1. Verbrennungsmotor, insbesondere ein Fahrzeugmotor, der mit mehreren Verbrennungskammern, mit einer Lufteinlassleitung (3), mit einem Einlasskrümmer (2), der geeignet ist, die von der genannten Leitung kommende Luft zu den genannten Verbrennungskammern zu verteilen, mit einer Abgasleitung für die verbrannten Gase, mit einer Rückführungsleitung (4), die geeignet ist, einen Teil der verbrannten Gase von der genannten Abgasleitung zu der genannten Einlassleitung zu übertragen, ausgestattet ist, **dadurch gekennzeichnet, dass** ein Segmentrohr (7) der genannten Einlassleitung zwischen dem Einleitungspunkt der genannten verbrannten Gase und dem Einlasskrümmer 5-bis 10-mal so lang wie der Innendurchmesser seines Querschnitts ist.

2. Motor gemäß Anspruch 1, **dadurch gekennzeichnet, dass** das genannte Rohrsegment 7-bis 8-mal so lang wie sein Innendurchmessers ist.

3. Motor gemäß einem der vorhergehenden Ansprüche, **dadurch gekennzeichnet, dass** das genannte Segment des Rohrs wenigstens eine Biegung aufweist, deren minimaler Krümmungsradius das 2-fache des Innendurchmessers des Schnittsnicht übersteigt.

4. Motor gemäß Anspruch 3, **dadurch gekennzeichnet, dass** das genannteSegment des Rohrs eine Richtungsänderung zwischen 90 und 270° bewirkt.

5. Motor mit Turbolader gemäß einem der vorhergehenden Ansprüche, wobei die Rückführung auf der Hochdruckseite stattfindet.

6. Dieselmotor gemäß einem der vorhergehenden Ansprüche.

7. Motor gemäßeinem der vorhergehenden Ansprüche, wobei an der Einlassleitung kein Kühler vorhanden ist.

8. Motor gemäß Anspruch 5, wobei auslassseitig des Kompressors mit Turbolader ein Kühler vorhanden ist und der Einleitungspunkt der zurückgeführten Gase auslassseitig des genannten Kühlers liegt.

9. Verfahren zum Zurückführen der verbrannten Gase in einem Verbrennungsmotor, das die Einleitung eines Teils verbrannter Gase in eine Einlassleitung, den Durchgang eines Gemischs verbrannter Gase und von Luft in ein Segment des Rohrs (7) zwischen dem Einleitungspunkt der genannten verbrannten Gase und dem Einlasskrümmer, das5- bis 10-mal so lang wie der Innendurchmesser seines Querschnitts ist, das Teil der genannten Einlassleitung ist, und die nachfolgende Einleitung des genannten Gemischs in einen Einlasskrümmer des genannten Motors umfasst.

10. Verfahren gemäß Anspruch 9, **dadurch gekennzeichnet, dass** das genannte Segment des Rohrs 7-bis 8-malso lang wie sein Innendurchmesser ist.

11. Verfahren gemäß einem Anspruch von 9 bis 10, **dadurch gekennzeichnet, dass** das genannte Segment des Rohrs wenigstens eine Biegung bietet, deren minimaler Krümmungsradius das 2-fache des Innendurchmessers des Schnitts nicht übersteigt.

12. Verfahren gemäß einem Anspruch von 9 bis 11, **dadurch gekennzeichnet, dass** die Gase zwischen dem Einleitungspunkt der zurückgeführten Gase und dem Eingang des Einlasskrümmers zu einer Richtungsänderung zwischen 90 und 270° gezwungen werden.

13. Verfahren gemäß einem Anspruch von 9 bis 12, **dadurch gekennzeichnet, dass** die zurückgeführten Gase in die Einlassleitung auslassseitig eines Kompressors mit Turbolader und eines möglichen Kühlers, der auslassseitig des genannten Kompressors angeordnet ist, eingeführt werden.

14. Fahrzeug, insbesondere gewerbliches Fahrzeug, das mit einem Motor gemäß einem Anspruch von 1 bis 8 versehen ist.

## Revendications

1. Moteur à combustion interne, en particulier un moteur de véhicule, équipé d'une pluralité de chambres de combustion, d'une conduite d'admission d'air (3), d'un collecteur d'admission (2) apte à distribuer l'air provenant de ladite conduite auxdites chambres de combustion, d'une conduite d'échappement pour les gaz brulés, d'une conduite de recirculation (4) apte à transférer une portion des gaz brulés de ladite conduite d'échappement à ladite conduite d'admission, **caractérisé en ce qu'**un segment de tuyau (7) de ladite conduite d'admission, entre le point d'introduction desdits gaz brulés et le collecteur d'admission, a une longueur de 5 à 10 fois le diamètre interne de sa section transversale.

2. Moteur selon la revendication 1, **caractérisé en ce que** ledit segment de tuyau a une longueur de 7 à 8 fois son diamètre interne.

3. Moteur selon l'une quelconque des revendications précédentes, **caractérisé en ce que** ledit segment du tuyau présente au moins un pli dont le rayon de courbure minimum ne dépasse pas 2 fois le diamètre interne de la section.

4. Moteur selon la revendication 3, **caractérisé en ce que** ledit segment du tuyau induit un changement de direction compris entre 90 et 270°.

5. Moteur turbocompressé selon l'une quelconque des revendications précédentes, dans lequel la recirculation a lieu au côté haute pression.

6. Moteur Diesel selon l'une quelconque des revendications précédentes.

7. Moteur selon l'une quelconque des revendications précédentes, dans lequel aucun organe de refroidissement n'est présent sur la conduite d'admission.

8. Moteur selon la revendication 5, dans lequel un organe de refroidissement est présent en aval du turbocompresseur, et le point d'introduction des gaz de recirculation est en aval dudit organe de refroidissement.

9. Procédé pour la recirculation des gaz brulés dans un moteur à combustion interne comprenant l'introduction d'une portion des gaz brulés dans une conduite d'admission, le passage d'un mélange de gaz brulés et d'air dans un segment de tuyau (7), entre le point d'introduction desdits gaz brulés et le collecteur d'admission, long de 5 à 10 fois le diamètre interne de sa section transversale faisant partie de ladite conduite d'admission, et l'introduction suivante dudit mélange dans un collecteur d'admission dudit moteur.

10. Procédé selon la revendication 9, **caractérisé en ce que** ledit segment de tuyau est long de 7 à 8 fois son diamètre interne.

11. Procédé selon l'une quelconque des revendications 9 à 10, **caractérisé en ce que** ledit segment de tuyau présente au moins un pli dont le rayon de courbure minimum ne dépasse pas 2 fois le diamètre interne de la section.

12. Procédé selon l'une quelconque des revendications 9 à 11, **caractérisé en ce que** les gaz, entre le point d'introduction des gaz en recirculation et l'entrée du collecteur d'admission, sont contraints à un changement de direction compris entre 90 et 270°.

13. Procédé selon l'une quelconque des revendications 9 à 12, **caractérisé en ce que** les gaz en recirculation sont introduits dans la conduite d'admission en aval d'un turbocompresseur et d'un organe de refroidissement éventuel placé en aval dudit compresseur.

14. Véhicule, en particulier véhicule industriel, muni d'un moteur en accord avec l'une quelconque des revendications 1 à 8.
